# EUROPÄISCHE PATENTSCHRIFT

(11) **EP 1 604 763 B1**
(45) Veröffentlichungstag und Bekanntmachung des Hinweises auf die Patenterteilung: **15.08.2012**
(21) Anmeldenummer: 05104995.5
(22) Anmeldetag: 08.06.2005
(51) Int. Cl.: B23B 51/04, B23Q 11/10, E21B 10/38, B25D 17/22

(54) **Schlagende Werkzeugmaschine mit Spülkopf**
Percussive machine-tool with flushing head
Machine-outil à percussion avec tête d'injection de liquide

(30) Priorität: 11.06.2004 DE 102004028371
(43) Veröffentlichungstag der Anmeldung: 14.12.2005
(73) Patentinhaber: HILTI Aktiengesellschaft, 9494 Schaan (LI)
(72) Erfinder: Götzfried, Stefan, 86862, Kleinkitzighofen (DE); Hauptmann, Udo, 86899, Landsberg (DE); Artmann, Konrad, 86938, Schondorf (DE)
(74) Vertreter: Wildi, Roland

(56) Entgegenhaltungen:
- DE-A1- 10 127 984
- GB-A- 1 215 154
- US-A1- 2003 098 168

## Beschreibung

Die Erfindung bezeichnet eine zumindest teilweise schlagende Werkzeugmaschine gemäß dem Oberbegriff des Anspruchs 1, wie einen Bohr- oder Meisselhammer, welcher vorzugsweise im Bergbau eingesetzt wird, mit einem Spülkopf. Eine solche Werkzeugmaschine is aus DE 10127984 A1 bekannt.

Leistungsstarke Bohr- oder Meisselhämmer mit einer Masse grösser 10 kg, wie sie im Bergbau zum Bohren von Sprenglöchern eingesetzt sind, weisen längs des zumeist langen Werkzeugschaftes zumindest teilweise eine axial verlaufende Spülbohrung zur Durchleitung von flüssigem Spül- und Kühlmittel wie Wasser auf, welches entweder zentral über die Werkzeugaufnahme oder über einen, den Werkzeugschaft im Bereich einer Spülöffnung dichtend umschliessenden, Spülkopf eingeleitet wird.

Nach der DE10127984 weist eine drehende und schlagende Werkzeugmaschine, welche im Bergbau zum Bohren von Sprenglöchern eingesetzt wird, einen gehäusefesten Spülkopf und radial innenliegend eine in die Werkzeugmaschine integrierte, zugleich schlagfrei drehantreibende und führende, hohlzylinderförmige Werkzeugaufnahme für das Einsteckende eines Gesteinsbohrers auf. Dessen langer Werkzeugschaft weist eine zum Einsteckende mit stirnseitigen Drehmitnahmenuten hin maschinenseitig geschlossene, axial verlaufende Spülbohrung zur Durchleitung von flüssigem Spül- und Kühlmittel wie Wasser auf, welches über einen an der Handwerkzeugmaschine integrierten Spülkopf durch die Werkzeugaufnahme hindurch in eine Querbohrung im Werkzeugschaft gelangt. Die maschinenseitig zu der Querbohrung erforderliche Abdichtung des Einsteckendes zu der maschinenseitig offenen Werkzeugaufnahme ist von der Oberflächenqualität der Dichtstelle des Einsteckendes abhängig, was insbesondere im rauhen Bergbau-Gewerbe problematisch ist und somit die Lebensdauer der Werkzeugmaschine begrenzt. Die Querbohrung stellt zudem für den mit Axialschlägen hochbeanspruchten Werkzeugschaft eine Sollbruchstelle dar, welche die Lebensdauer des Werkzeugs begrenzt.

Zudem ist nach der DE3610680 bei einer schlagenden Handwerkzeugmaschine mit einer in die Werkzeugmaschine integrierten Werkzeugaufnahme für ein Schlagwerkzeug die Werkzeugführung in der integrierten Werkzeugaufnahme und die Dreh- und Schlagübertragung im topfförmigen Döpper ausgebildet, der selbst gegen das, den Axialschlag erzeugende, pneumatische Schlagwerk abgedichtet ist.

Des weiteren erfolgt nach der US4711609 die Schlagübertragung mittels einer ringförmigen Schlagstirnseite der schlagend angetriebenen, hohlzylindrischen Werkzeugaufnahme auf einen Ringflansch am Einsteckende des Werkzeugs.

Die Aufgabe der Erfindung besteht in der Realisierung einer robusten, maschinenseitig zuverlässig flüssigkeitsdichten Werkzeugmaschine für ein drehend und schlagend angetriebenes Werkzeug mit Spülbohrung.

Die Aufgabe wird erfindungsgemäß durch die Merkmale des Anspruchs 1 gelöst. Vorteilhafte Weiterbildungen ergeben sich aus den Unteransprüchen.

So weist eine Werkzeugmaschine mit einem Schlagmittel, über welches ein zumindest teilweise längs einer Achse schlagend antreibbares Schlagwerkzeug mit einer sich zumindest teilweise längs durch einen Werkzeugschaft erstreckenden Spülbohrung direkt schlagbar ist, einen Spülkopf mit zumindest einer mit einem Flüssigkeitskanal durchströmbar verbundenen und nach radial innen offenen Querbohrung sowie zumindest einer hohlzylindermantelförmigen Führungsfläche auf, die passend für ein Einsteckende des Schlagwerkzeugs ausgebildet ist, wobei das mittels einer Dichtung strömungsdicht beweglich geführte Schlagmittel topfförmig das maschinenseitige Ende des Einsteckendes mit der maschinenseitig offenen Spülbohrung maschinenseitig strömungsdicht umfassbar ausgebildet ist.

Indem der direkt das Schlagwerkzeug führende Spülkopf mit einem strömungsdicht beweglich geführten sowie topfförmig ausgebildeten Schlagmittel kombiniert ist, der das maschinenseitige Ende des Einsteckendes strömungsdicht umfasst, ist die Dichtung des Schlagmittels zur Abdichtung des vorzugsweise pneumatischen Schlagwerks hinreichend, wodurch ein allfälliges Dichtungsleck am Einsteckende unbeachtlich ist, da die Leckflüssigkeit werkzeugseitig frei abfliessen kann.

Vorteilhaft weist der Spülkopf eine im radial Innern koaxial angeordnete Lagerhülse auf, welche die hohlzylindermantelförmige Führungsfläche ausbildet und von der Querbohrung durchsetzt ist, wodurch diese bezüglich des restlichen Spülkopfes aus verschleissärmeren Gleitlagermaterial wie RG7-Bronze oder kohlefaserverstärktem Polyamid ausbildbar ist.

Vorteilhaft weist der Hohlzylinder des topfförmigen Schlagmittels eine axiale Länge grösser als das Dreifache des Aussendurchmessers auf, wodurch das Schlagmittel einen akustisch langen Körper geringer akustischer Impedanz ausbildet, der Axialstösse an ein langes Schlagwerkzeug akustisch angepasst und somit reflektionsarm übertragen kann, wodurch die Bohrleistung optimiert wird.

Erfindungsgemäß erstreckt sich das Schlagmittel werkzeugseitig axial bis in den Spülkopf hinein, wobei weiter vorteilhaft zwischen dem Schlagmittel und dem Spülkopf eine Spüldichtung angeordnet ist, wodurch werkzeugseitig zur Queröffnung eine erste, zumindest die Einströmung in einen Leckageraum dahinter vermindernde, Vordichtung realisiert ist.

Vorteilhaft weist der Spülkopf eine nach Aussen offene Leckageöffnung zu einem maschinenseitig von der Spüldichtung angeordneten Leckageraum auf, wodurch in den Leckageraum gelangende Leckflüssigkeit sowie eine bei Werkzeugwechsel entstehende Verunreinigung durch diese Leckageöffnung frei abfliessen kann.

Vorteilhaft sind an der Innenfläche des topfförmigen Schlagmittels sich längs der Achse erstreckende Strömungsnuten vorhanden, wodurch unabhängig vom Verschleiss des Einsteckendes stets ein geringer Strömungswiderstand für die zwischen der Innenfläche des topfförmigen Schlagmittels und dem Einsteckende des Schlagwerkzeugs entlang strömende Spülflüssigkeit realisiert ist.

Vorteilhaft ist das Schlagmittel zumindest teilweise in einer, dieses koaxial aussen umfassenden, Führungshülse beweglich angeordnet, wodurch diese bezüglich einem Schlagwerksgehäuse aus hochfestem, verschleissärmeren Material wie Stahl ausbildbar ist.

Vorteilhaft ist die Führungshülse drehbar, wodurch eine Drehschlagbewegung des Schlagmittels bezüglich der Werkzeugmaschine in eine Axialschwingung bezüglich der Führungshülse und in eine Drehung dieser bezüglich dem Schlagwerksgehäuse erzielt wird.

Vorteilhaft ist die Dichtung des Schlagmittels bezüglich des Schlagwerksgehäuses durch eine zwischen dem Schlagmittel und der Führungshülse angeordnete Axialschwingungsdichtung, wie eine Streif- oder Balgdichtung, und eine zwischen der drehbaren Führungshülse und dem Schlagwerksgehäuse angeordnete Drehdichtung, wie ein Simmering, ausgebildet, wodurch über die gesamte Nutzungsdauer eine zuverlässige Abdichtung erzielt wird.

Vorteilhaft weist das Schlagmittel zusätzlich Drehantriebsmittel auf, weiter vorteilhaft sich längs der Achse erstreckende Drehmitnahmenuten, in welche in der Führungshülse fixierte Drehmitnahmekörper eingreifen, wodurch eine Drehmomentübertragung auf das Schlagmittel realisiert wird.

Vorteilhaft weist das Schlagmittel zusätzlich Drehabtriebsmittel auf, weiter vorteilhaft sich längs der Achse erstreckende Drehmitnahmestege, die Drehmitnahmenuten am Einsteckende passend zuordenbar sind, wodurch eine Drehmomentübertragung auf das Werkzeug realisiert wird.

Vorteilhaft bildet das Schlagmittel werkzeugseitig eine kreisringförmige Schlagstirnseite aus, wodurch axiale Schläge auf einen am Einsteckende des Schlagwerkzeugs angeordneten Ringflansch ermöglicht werden und somit das Stirnende des Einsteckendes stets frei umströmbar ist.

Alternativ vorteilhaft bildet das Schlagmittel am werkzeugseitigen Topfboden eine ballige Schlagfläche aus, wodurch beim Schlag auf die Stirnfläche des Schlagwerkzeugs ein nahezu zentraler Stoss selbst bei kleinen Führungsfehlern erfolgt und somit eine gute Stossimpulsübertragung ermöglicht ist.

Die Erfindung wird bezüglich eines vorteilhaften Ausführungsbeispiels näher erläutert mit:
Fig. 1 als Teil-Längsschnitt einer Werkzeugmaschine
Fig. 2 als Variante

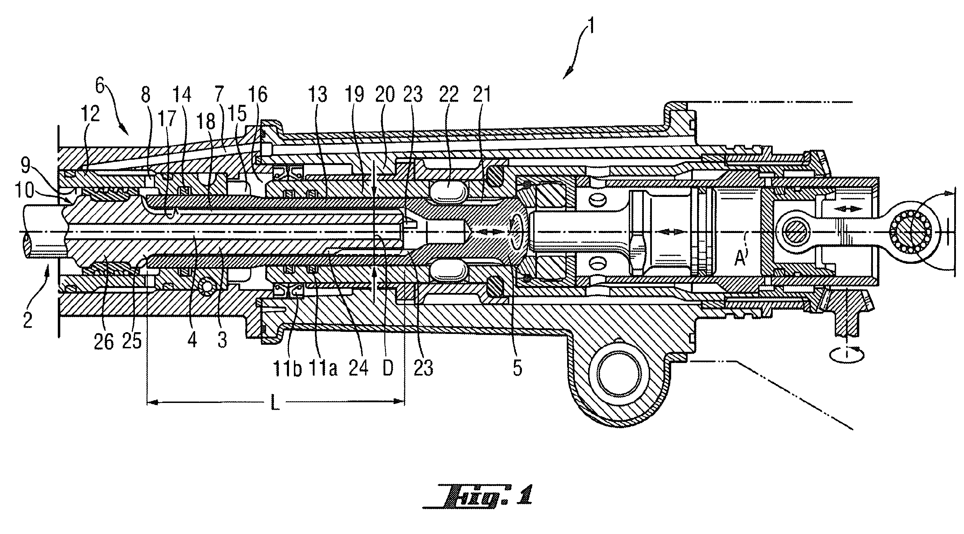

Nach Fig. 1 weist eine nur teilweise dargestellte Werkzeugmaschine 1 ein Schlagmittel 5 auf, welches ein längs einer Achse A drehend und schlagend angetriebenes, nur teilweise dargestelltes, Schlagwerkzeug 2 mit einer sich längs durch einen Werkzeugschaft 3 erstreckenden Spülbohrung 4 direkt schlägt. Zudem weist die Werkzeugmaschine 1 einen Spülkopf 6 mit mehreren, mit einem Flüssigkeitskanal 7 durchströmbar verbundenen und nach radial innen offenen, Querbohrungen 8 sowie mit einer hohlzylindermantelförmigen Führungsfläche 9 auf, die passend für ein Einsteckende 10 des Schlagwerkzeugs 2 ausgebildet ist. Das mittels einer Dichtung 11 a+11 b strömungsdicht beweglich geführte Schlagmittel 5 ist topfförmig ausgebildet, wobei das maschinenseitige Teil des Einsteckendes 10 mit der maschinenseitig offenen Spülbohrung 4 maschinenseitig strömungsdicht umfasst ist. Der aus Stahl bestehende Spülkopf 6 weist eine im radial Innern koaxial angeordnete Lagerhülse 12 aus Bronze auf, welche die hohlzylindermantelförmige Führungsfläche 9 ausbildet und von den Querbohrungen 8 durchsetzt ist. Der Hohlzylinder 13 des topfförmigen Schlagmittels 5 weist eine axiale Länge L auf, die dem Vierfachen des Aussendurchmessers D entspricht. Das Schlagmittel 5 erstreckt sich werkzeugseitig axial bis in den Spülkopf 12 hinein, wobei zwischen dem Schlagmittel 5 und dem Spülkopf 6 eine Spüldichtung 14 angeordnet ist. Der Spülkopf 6 weist eine nach Aussen offene Leckageöffnung 15 zu einem maschinenseitig von der Spüldichtung 14 angeordneten Leckageraum 16 auf. An der Innenfläche 17 des topfförmigen Schlagmittels 5 sind sich längs der Achse A erstreckende Strömungsnuten 18 vorhanden. Das Schlagmittel 5 ist in einer dieses maschinenseitig koaxial aussen umfassenden, drehbaren Führungshülse 19 aus Stahl axial begrenzt beweglich angeordnet. Die Dichtung 11a+11b des Schlagmittels 5 ist bezüglich eines Schlagwerksgehäuses 20 aus Aluminium durch eine zwischen dem Schlagmittel 5 und der Führungshülse 19 angeordnete Axialschwingungsdichtung 11a in Form einer Streifdichtung und eine zwischen der drehbaren Führungshülse 19 und dem Schlagwerksgehäuse 20 angeordnete Drehdichtung 11 b in Form eines Simmerings ausgebildet. Das Schlagmittel 5 weist zusätzlich Drehantriebsmittel 21 in Form sich längs der Achse A erstreckende Drehmitnahmenuten auf, in welche in der Führungshülse 19 fixierte Drehmitnahmekörper 22 eingreifen. Das Schlagmittel 5 weist zudem Drehabtriebsmittel 23 in Form sich längs der Achse A erstreckender Drehmitnahmestege auf, die in Drehmitnahmenuten 24 am Einsteckende 10 eingreifen. Das Schlagmittel 5 bildet werkzeugseitig eine kreisringförmige Schlagstirnseite 25 aus, die axial auf einen am Einsteckende 10 des Schlagwerkzeugs 2 angeordneten Ringflansch 26 schlägt.

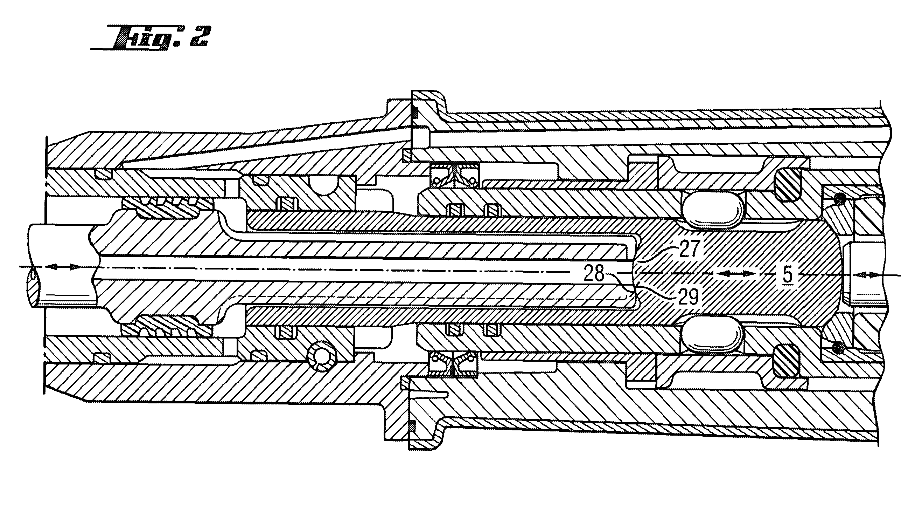

Nach der in Fig. 2 nur ausschnittsweise dargestellten Variante bildet das Schlagmittel 5 am werkzeugseitigen Topfboden 27 eine ballige Schlagfläche 28 aus, die auf die Stirnfläche 29 des Schlagwerkzeugs 2 schlägt.

## Patentansprüche

1. Werkzeugmaschine mit einem Schlagmittel (5), über welches ein zumindest teilweise längs einer Achse (A) schlagend antreibbares Schlagwerkzeug (2) mit einer sich zumindest teilweise längs durch einen Werkzeugschaft (3) erstreckenden Spülbohrung (4) direkt schlagbar ist, und mit einem Spülkopf (6) mit zumindest einer mit einem Flüssigkeitskanal (7) durchströmbar verbundenen und nach radial innen offenen Querbohrung (8), wobei der Spülkopf (6) zumindest eine hohlzylindermantelförmige Führungsfläche (9) aufweist, die passend für ein Einsteckende (10) des Schlagwerkzeugs (2) ausgebildet ist, wobei sich das Schlagmittel (5) werkzeugseitig axial bis in den Spülkopf (6) hinein erstreckt, und wobei zwischen dem Schlagmittel (5) und dem Spülkopf (6) eine Spüldichtung (14) angeordnet ist, **dadurch gekennzeichnet, dass** das mittels einer Dichtung (11a, 11b) strömungsdicht beweglich geführte Schlagmittel (5) topfförmig, das maschinenseitige Ende des Einsteckendes (10) mit der maschinenseitig offenen Spülbohrung (4) maschinenseitig strömungsdicht umfassbar, ausgebildet ist.

2. Werkzeugmaschine nach Anspruch 1, **dadurch gekennzeichnet, dass** der Spülkopf (6) eine im radial Innern koaxial angeordnete Lagerhülse (12) aufweist, welche die hohlzylindermantelförmige Führungsfläche (9) ausbildet und von der Querbohrung (8) durchsetzt ist.

3. Werkzeugmaschine nach Anspruch 1 oder 2, **dadurch gekennzeichnet, dass** der Hohlzylinder (13) des topfförmigen Schlagmittels (5) eine axiale Länge (L) grösser als das Dreifache des Aussendurchmessers (D) aufweist.

4. Werkzeugmaschine nach Anspruch 1, **dadurch gekennzeichnet, dass** der Spülkopf (6) eine nach Aussen offene Leckageöffnung (15) zu einem maschinenseitig von der Spüldichtung (14) angeordneten Leckageraum (16) aufweist.

5. Werkzeugmaschine nach einem der vorherigen Ansprüche, **dadurch gekennzeichnet, dass** an der Innenfläche (17) des topfförmigen Schlagmittels (5) sich längs der Achse (A) erstreckende Strömungsnuten (18) vorhanden sind.

6. Werkzeugmaschine nach einem der vorherigen Ansprüche, **dadurch gekennzeichnet, dass** das Schlagmittel (5) zumindest teilweise in einer, dieses koaxial aussen umfassenden, Führungshülse (19) beweglich angeordnet ist.

7. Werkzeugmaschine nach Anspruch 1, **dadurch gekennzeichnet, dass** die Führungshülse (19) drehbar ist.

8. Werkzeugmaschine nach Anspruch 7, **dadurch gekennzeichnet, dass** die Dichtung des Schlagmittels (5) bezüglich eines Schlagwerksgehäuses (20) durch eine zwischen dem Schlagmittel (5) und der Führungshülse (19) angeordnete Axialschwingungsdichtung (11a) und eine zwischen der drehbaren Führungshülse (19) und dem Schlagwerksgehäuse (20) angeordnete Drehdichtung (11 b) ausgebildet ist.

9. Werkzeugmaschine nach einem der vorherigen Ansprüche, **dadurch gekennzeichnet, dass** das Schlagmittel (5) ein Drehantriebsmittel (21) aufweist, optional sich längs der Achse (A) erstreckende Drehmitnahmenuten, in welche in der Führungshülse (19) fixierte Drehmitnahmekörper (22) eingreifen.

10. Werkzeugmaschine nach einem der vorherigen Ansprüche, **dadurch gekennzeichnet. dass** das Schlagmittel (5) ein Drehabtriebsmittel (23) aufweist, optional sich längs der Achse (A) erstreckende Drehmitnahmestege, die Drehmitnahmenuten (24) am Einsteckende (10) passend zuordenbar sind.

11. Werkzeugmaschine nach einem der vorherigen Ansprüche, **dadurch gekennzeichnet, dass** das Schlagmittel (5) werkzeugseitig eine kreisringförmige Schlagstirnseite (25) ausbildet.

12. Werkzeugmaschine nach einem der Ansprüche 1 bis 10, **dadurch gekennzeichnet, dass** das Schlagmittel (5) am werkzeugseitigen Topfboden (27) eine ballige Schlagfläche (28) ausbildet.

## Claims

1. Machine tool comprising a striking means (5) for directly striking a percussive tool (2) driven at least partially along an axis (A) and having a rinsing bore (4) extending at least partially longitudinally through a tool shank (3), and comprising a rinsing head (6) having at least one radially inwardly open transverse bore (8) connected to a fluid duct (7) so as to allow for through flow, the rinsing head (6) having at least one hollow cylindrical guide surface (9) designed to match an insertion end (10) of the percussive tool (2), the striking means (5) extending axially into the rinsing head (6) on the tool side and a rinsing seal (14) being arranged between the striking means (5) and the rinsing head (6), **characterised in that** the movably guided striking means (5) made fluid-tight by means of a seal (11a, 11b) is cup-shaped and designed to embrace the machine end of the insertion end (10) having the rinsing bore (4) open on the machine side in a fluid-tight manner on the machine side.

2. Machine tool according to claim 1, **characterised in that** the rinsing head (6) has a radially internally coaxially arranged bearing sleeve (12) which forms the hollow cylindrical guide surface (9) and is traversed by the transverse bore (8).

3. Machine tool according to claim 1 or claim 2, **characterised in that** the hollow cylinder (13) of the cup-shaped striking means (5) has an axial length (L) of more than three times the outside diameter (D).

4. Machine tool according to claim 1, **characterised in that** the rinsing head (6) has a leakage opening (15) open outwardly relative to a leakage space (16) arranged on the machine side of the rinsing seal (14).

5. Machine tool according to one of the preceding claims, **characterised in that** flow grooves (18) extending along the axis (A) are provided on the inner surface (17) of the cup-shaped striking means (5).

6. Machine tool according to one of the preceding claims, **characterised in that** the striking means (5) is movably arranged at least partially in a guide sleeve (19) coaxially externally embracing same.

7. Machine tool according to claim 1, **characterised in that** the guide sleeve (19) is rotatable.

8. Machine tool according to claim 7, **characterised in that** the striking means (5) is sealed with respect to a striking mechanism housing (20) by an axial vibration seal (11a) arranged between the striking means (5) and the guide sleeve (19) and a rotary seal (11b) arranged between the rotatable guide sleeve (19) and the striking mechanism housing (20).

9. Machine tool according to one of the preceding claims, **characterised in that** the striking means (5) has a rotary driving means (21), optionally rotary drive grooves extending along the axis (A) and engaged by rotary drive elements (22) fixed in the guide sleeve (19).

10. Machine tool according to one of the preceding claims, **characterised in that** the striking means (5) has a rotary driven means (23), optionally rotary drive webs extending along the axis (A) with which matching rotary drive grooves (24) at the insertion end (10) can be associated.

11. Machine tool according to one of the preceding claims, **characterised in that** the striking means (5) forms a circular striking face (25) on the tool side.

12. Machine tool according to one of claims 1 to 10, **characterised in that** the striking means (5) forms a spherical striking surface (28) on the cup bottom (27) on the tool side.

## Revendications

1. Machine-outil comportant des moyens de percussion (5) par l'intermédiaire desquels un outil de percussion (2) peut être directement percuté, lequel outil de percussion peut être entraîné en percussion au moins partiellement le long d'un axe (A) et a un alésage de rinçage (4) s'étendant au moins de manière partiellement longitudinale à travers une tige d'outil (3), et comportant une tête de rinçage (6) munie d'au moins un alésage transversal radialement ouvert vers l'intérieur (8) et relié à un canal de liquide (7) de manière à permettre un écoulement, dans laquelle la tête de rinçage (6) comporte au moins une surface de guidage (9) en forme d'enveloppe cylindrique creuse, laquelle surface de guidage est formée de manière adaptée pour une extrémité d'insertion (10) de l'outil de percussion (2), dans laquelle les moyens de percussion (5) côté outil s'étendent axialement jusque dans la tête de rinçage (6), et dans laquelle un joint de rinçage (14) est agencé entre les moyens de percussion (5) et la tête de rinçage (6), **caractérisée en ce que** les moyens de percussion (5) guidés de manière mobile et étanche à l'écoulement au moyen d'un joint (11a, 11b) sont en forme de cuvette, l'extrémité côté machine de l'extrémité d'insertion (10) étant formée de manière à pouvoir enserrer l'alésage de rinçage (14) ouvert côté machine de manière étanche à l'écoulement.

2. Machine-outil selon la revendication 1, **caractérisée en ce que** la tête de rinçage (6) comporte une douille de support (12) agencée coaxialement et radialement vers l'intérieur, laquelle douille de support forme la surface de guidage (9) en forme d'enveloppe cylindrique creuse et est traversée par l'alésage transversal (8).

3. Machine-outil selon la revendication 1 ou 2, **caractérisée en ce que** le cylindre creux (13) des moyens de percussion en forme de cuvette (5) a une longueur axiale (L) plus grande que le triple du diamètre extérieur (D).

4. Machine-outil selon la revendication 1, **caractérisée en ce que** la tête de rinçage (6) comporte une ouverture de fuite (15) ouverte vers l'extérieur par rapport à un espace de fuite (16) agencé du côté machine par rapport au joint de rinçage (14).

5. Machine-outil selon l'une quelconque des revendications précédentes, **caractérisée en ce que** des rainures d'écoulement (18) s'étendant le long de l'axe (A) sont agencées sur la surface intérieure (17) des moyens de percussion (5) en forme de cuvette.

6. Machine-outil selon l'une quelconque des revendications précédentes, **caractérisée en ce que** les moyens de percussion (5) sont agencés de manière à pouvoir se déplacer au moins partiellement dans une douille de guidage (19) enserrant coaxialement et extérieurement ces moyens de percussion.

7. Machine-outil selon la revendication 1, **caractérisée en ce que** la douille de guidage (19) est rotative.

8. Machine-outil selon la revendication 7, **caractérisée en ce que** le joint des moyens de percussion (5) par rapport à un boîtier de mécanisme de percussion (20) est formé par un joint de vibration axial (11a) agencé entre les moyens de percussion (5) et la douille de guidage (19) et un joint rotatif (11b) agencé entre la douille de guidage rotative (19) et le boîtier de mécanisme de percussion (20).

9. Machine-outil selon l'une quelconque des revendications précédentes, **caractérisée en ce que** les moyens de percussion (5) comportent des moyens d'entraînement en rotation (21), facultativement des rainures d'entraînement en rotation s'étendant le long de l'axe (A), dans lesquels s'engagent des corps d'entraînement en rotation (22) fixés dans la douille de guidage (19).

10. Machine-outil selon l'une quelconque des revendications précédentes, **caractérisée en ce que** les moyens de percussion (5) comportent des moyens d'entraînement en rotation (23), facultativement des bandes d'entraînement en rotation s'étendant le long de l'axe (A), qui peuvent être associés de manière adaptée à des rainures d'entraînement en rotation (24) sur l'extrémité d'insertion (10).

11. Machine-outil selon l'une quelconque des revendications précédentes, **caractérisée en ce que** les moyens de percussion (5) côté outil forment une face de percussion annulaire circulaire (25).

12. Machine-outil selon l'une quelconque des revendications 1 à 10, **caractérisée en ce que** les moyens de percussion (5) forment une surface de percussion convexe (28) sur le fond de cuvette côté outil (27).
